(19) Europäisches Patentamt
European Patent Office
Office européen des brevets

(11) **EP 3 089 354 B1**

(12) **EUROPEAN PATENT SPECIFICATION**

(45) Date of publication and mention of the grant of the patent:
**22.09.2021 Bulletin 2021/38**

(21) Application number: **13900138.2**

(22) Date of filing: **24.12.2013**

(51) Int Cl.:
*H02P 27/06* *(2006.01)*  *H02P 21/04* *(2006.01)*
*H02P 21/14* *(2016.01)*  *H02P 29/024* *(2016.01)*

(86) International application number:
**PCT/JP2013/084398**

(87) International publication number:
**WO 2015/097734 (02.07.2015 Gazette 2015/26)**

(54) **POWER CONVERSION DEVICE**

STROMWANDLER

DISPOSITIF DE CONVERSION DE PUISSANCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.11.2016 Bulletin 2016/44**

(73) Proprietor: **Hitachi Industrial Equipment Systems Co., Ltd.**
**Tokyo 101-0022 (JP)**

(72) Inventors:
• **ARAO, Yusuke**
**Tokyo 101-0022 (JP)**

• **SUGIMOTO, Takuya**
**Tokyo 101-0022 (JP)**

(74) Representative: **Mewburn Ellis LLP**
**Aurora Building**
**Counterslip**
**Bristol BS1 6BX (GB)**

(56) References cited:
**JP-A- S5 540 985**      **JP-A- H09 294 390**
**JP-A- 2000 278 985**   **JP-A- 2001 025 282**
**JP-A- 2001 025 282**   **JP-A- 2008 092 787**
**JP-A- 2008 092 787**   **JP-A- 2009 065 764**
**JP-A- 2009 065 764**   **JP-A- 2009 174 416**
**JP-A- 2009 174 416**

**Description**

TECHNICAL FIELD

The present invention relates to a step-out detection function in a power conversion device.

BACKGROUND ART

As a background art of this technical field, there is JP-B-4167863 (Patent Literature 1). Patent Literature 1 says "a control device for a synchronous motor that comprises an inverter circuit for converting DC voltage into three-phase AC voltage and driving the synchronous motor, current detection means for detecting current flowing through the synchronous motor, a control circuit for performing control processing according to command speed, and a driver for driving the inverter circuit, wherein the control circuit comprises coordinate conversion means for computing excitation current from motor current detected by the current detection means, excitation current command generation means, voltage command generation means for determining output voltage of the inverter circuit using a motor constant setting value, an excitation current command and the excitation current, and a power generation constant correction computation unit for creating an after-correction power generation constant so that the excitation current command and the excitation current accord, wherein the power generation constant is a constant to determine induced voltage generated during rotation of the motor, the after-correction power generation constant and a preset prescribed value are compared, and thereby step-out of the synchronous motor is detected."
JP 2009 065764 A discloses a motor controller including a power converter energizing a motor based on a communication signal.
JP 2001 025282 A discloses a step-out detector for a sensorless brushless motor.
JP 2008 092787 A discloses a drive unit for an electric motor.
JP 2009 174416 A discloses an air compressor, wherein an air compressor and a motor means for generating compressed air.

CITATION LIST

PATENT LITERATURE

   Patent Literature 1: JP-B-4167863
   Patent Literature 2: JP 2009 065764 A
   Patent Literature 3: JP 2001 025282 A
   Patent Literature 4: JP 2008 092787 A
   Patent Literature 5: JP 2009 174416 A

SUMMARY OF INVENTION

TECHNICAL PROBLEM

As a method for detecting step-out of a synchronous motor, the disclosed contents of Patent Literature 1 have a possibility that detection may be difficult in the state of induced voltage generated by the rotation of a magnet being small at the time of a startup or low speed because of performing detection using induced voltage of the synchronous motor. The present invention aims for providing a power conversion device that stably detects step-out, especially even in a low-speed region where induced voltage is small.

SOLUTION TO PROBLEM

In order to solve the above-described problem, for example, configurations described in the claims are adopted. Accordingly, there is provided a power conversion device according to claim 1.

ADVANTAGEOUS EFFECTS OF INVENTION

Because the present invention determines whether or not step-out has occurred from a command voltage phase and a detection current phase generated based on the command voltage phase, it is not affected by induced voltage that gets smaller in a low-speed region, and can stably detect step-out.

Objects, configurations, and effects other than those above will be clear from the following explanation of embodiments.

BRIEF DESCRIPTION OF DRAWINGS

[Fig. 1] Fig. 1 is an example of a configuration diagram of a power conversion device in Embodiments 1-3.

[Fig. 2] Fig. 2 is an example of a flowchart indicating the determination operation of a step-out determination unit in Embodiment 1.

[Fig. 3] Fig. 3 is an example of a diagram indicating current and voltage phases in a step-out determination state in Embodiment 1.

[Fig. 4] Fig. 4 is an example of a flowchart indicating determination of step-out in Embodiments 1-3.

[Fig. 5] Fig. 5 is an example of a flowchart indicating determination operation of a step-out determination unit in Embodiment 2.

[Fig. 6] Fig. 6 is an example of a diagram indicating a current phase in a step-out determination state in Embodiment 2.

[Fig. 7] Fig. 7 is an example of a flowchart indicating determination operation of a step-out determination unit in Embodiment 3.

[Fig. 8] Fig. 8 is an example of a diagram indicating current and voltage phases in a step-out determination state in Embodiment 3.

[Fig. 9] Fig. 9 is an example of a flowchart indicating operation after step-out determination in Embodiments 1-3.

DESCRIPTION OF EMBODIMENTS

Hereinafter, embodiments will be explained in reference to the drawings.

EMBODIMENT 1

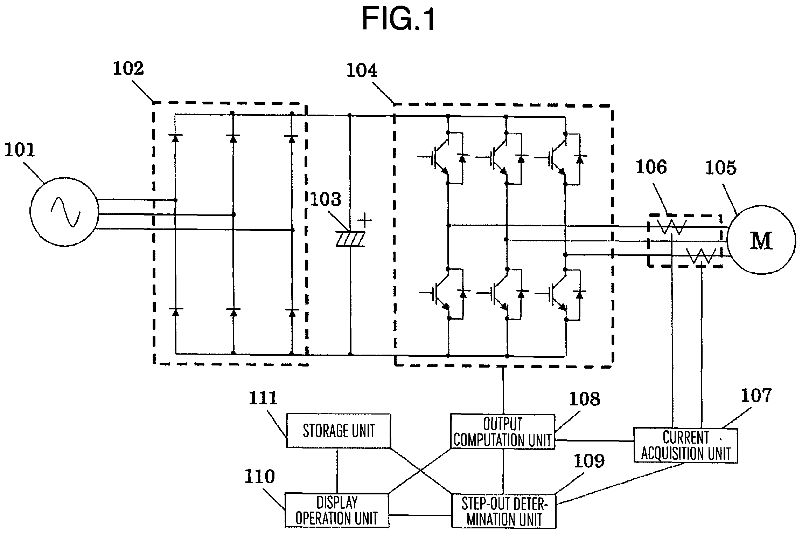

This embodiment explains a detection example related to step-out of a synchronous motor and an operation example after detection. Fig. 1 is an example of a configuration diagram of a power conversion device in this embodiment and a synchronous motor 105. The embodiment includes a three-phase AC power supply 101, a DC conversion unit 102, a smoothing capacitor 103, a power conversion unit 104, the synchronous motor 105, a current detector 106, a current acquisition unit 107, an output computation unit 108, a step-out determination unit 109, a display operation unit 110, and a storage unit 111.

The three-phase AC power supply 101 is, for example, three-phase AC voltage supplied by a power company or AC voltage supplied by a power generator, and is output to the DC conversion unit 102.

The DC conversion unit 102 consists of, for example, a DC conversion circuit composed of diodes or a DC conversion circuit using an IGBT and a flywheel diode, converts AC voltage input from the three-phase AC power supply 101 into DC voltage, and outputs the DC voltage to the smoothing capacitor 103. Fig. 1 shows a DC conversion unit composed of diodes.

The smoothing capacitor 103 smooths DC voltage input from the DC conversion unit 102, and outputs DC voltage to the power conversion unit 104. For example, if output of a power generator is DC voltage, the DC voltage may be directly input into the smoothing capacitor 103 from the power generator without going through the DC conversion unit 102.

The power conversion unit 104 consists of, for example, an AC conversion circuit using an IGBT and a flywheel diode, accepts DC voltage from the smoothing capacitor 103 and an output command from the output computation unit 108 as input, converts the DC voltage into AC voltage, and outputs the AC voltage to the synchronous motor 105.

The current detector 106 is comprised of, for example a Hall CT or a shunt resistance, detects current flowing through the synchronous motor 105 by being placed at an output part of the power conversion device, and outputs the detected current as a current detection value to the current acquisition unit 107. The current detector 106 may be placed anywhere as long as it is placed at a place where it can estimate or directly detect three-phase output current. Fig. 1 shows an example of detecting current flowing through the synchronous motor 105.

The current acquisition unit 107 converts the current detection value input from the current detector 106 into, for example, current data Id and Iq in a two-axis coordination system in which a magnet axis is made a "d" axis and an axis orthogonal to it is made a "q" axis, and outputs the current data to the output computation unit 108 and the step-out determination unit 109. The data output by the current acquisition unit 107 may be three-phase current or data converted into DC current as long as the phase of the current can be computed.

The output computation unit 108 accepts, as input, current data output by the current acquisition unit 107, "operation after a step-out determination state" output by the step-out determination unit 109, and an operation command from the display operation unit 110, computes output voltage, for example, so as to be able to optimally control the torque characteristic of the synchronous motor, converts the output voltage into, for example, output voltage data Vd* and Vq* in the two-axis coordinate system in which the magnet axis is made the "d" axis and the axis orthogonal to it is made the "q" axis, and outputs the output voltage data to the power conversion unit 104 and the step-out determination unit 109.

The step-out determination unit 109 accepts, as input, current data, for example Id and Iq, acquired by the current acquisition unit 107, output voltage data, for example Vd* and Vq*, computed by the output computation unit 108, computes the phase δI of acquisition current and the phase 8V of output voltage on the basis of the magnet axis as a reference axis for example, and determines whether or not a step-out determination state is occurring. A determination method for the step-out determination state will be explained below in detail. The step-out determination unit 109 acquires after-step-out operation from the storage unit 111, and outputs the after-step-out operation to the output computation unit 108 after it has determined that step-out has occurred.

The display operation unit 110 is comprised of, for example, a user interface like an operator connected with an operation panel on an operation board or the power conversion device, and outputs after-step-out operation selected by an operator to the storage unit 111. In addition, the display operation unit 110, for example, performs alarm display indicating that it is a step-out determination state now in response to the step-out determination state input from the step-out determination unit 109.

The storage unit 111 is comprised of, for example, an EEPROM or a RAM, stores after-step-out operation data input from the display operation unit 110 as input, and outputs the after-step-out operation data to the step-out determination unit 109.

Next, the step-out detection principle of the embodiment will be explained.

The following Expression 1 holds true for a model of a permanent magnet synchronous motor in a steady state.
[Expression 1]

$$\begin{bmatrix} V_d \\ V_q \end{bmatrix} = \begin{bmatrix} RI_d - \omega L_q I_q \\ RI_q + \omega(L_d I_d + K_e) \end{bmatrix}$$

(Expression 1)

In the above expression, R represents a resistance value of the synchronous motor, Ld a d-axis inductance value of the synchronous motor, Lq a q-axis inductance value of the synchronous motor, ω rotation speed, Id d-axis current, Iq q-axis current, Ke an induced voltage coefficient of the synchronous motor, Vd d-axis voltage, and Vq q-axis voltage.

For example, the output computation unit 108 computes voltage, for example, like Expression 2 on the basis of Expression 1 when computing the voltage that should be output.
[Expression 2]

$$\begin{bmatrix} V_d* \\ V_q* \end{bmatrix} = \begin{bmatrix} RI_d* - \omega*L_q I_q* \\ RI_q* + \omega*(L_d I_d* + K_e) \end{bmatrix}$$

(Expression 2)

In the above expression, ω* represents a rotation speed command, Id* a d-axis current command, Iq* a q-axis current command, Vd* a d-axis voltage command, and Vq* a q-axis voltage command.

The synchronous motor 105 does not generate induced voltage if the step-out of the synchronous motor has occurred and the synchronous motor stops its rotation. When rotation speed is considered almost 0, Expression 1 can be approximated by Expression 3. However, because the synchronous motor 105 receives output from the power conversion device, the left-hand side and right-hand side of Expression 3 do not accord completely.

[Expression 3]

$$\begin{bmatrix} V_d^r \\ V_q^r \end{bmatrix} \cong \begin{bmatrix} RI_d \\ RI_q \end{bmatrix}$$

(Expression 3)

The state of Expression 3 indicates that ratios of current and voltage become almost the same rate. If there is output from the power conversion device, relation between detection current and output voltage becomes a state indicated by Expression 4 according to output voltage.

[Expression 4]

$$\begin{bmatrix} V_d^r* \\ V_q^r* \end{bmatrix} \cong \begin{bmatrix} RI_d \\ RI_q \end{bmatrix}$$

(Expression 4)

The current phase δI is computed according to Expression 5 on the basis of the "d" axis as a reference axis.

[Expression 5]

$$\delta I = \arctan\left(\frac{Iq}{Id}\right)$$

(Expression 5)

The voltage phase 8V is computed according to Expression 6 on the basis of the "d" axis as a reference axis.

[Expression 6]

$$\delta V = \arctan\left(\frac{Vq*}{Vd*}\right)$$

(Expression 6)

In other words, relation between the current phase and the voltage phase is expressed by Expression 7.

[Expression 7]

$$\delta V^r \cong \delta I$$

(Expression 7)

The embodiment detects step-out using this state.

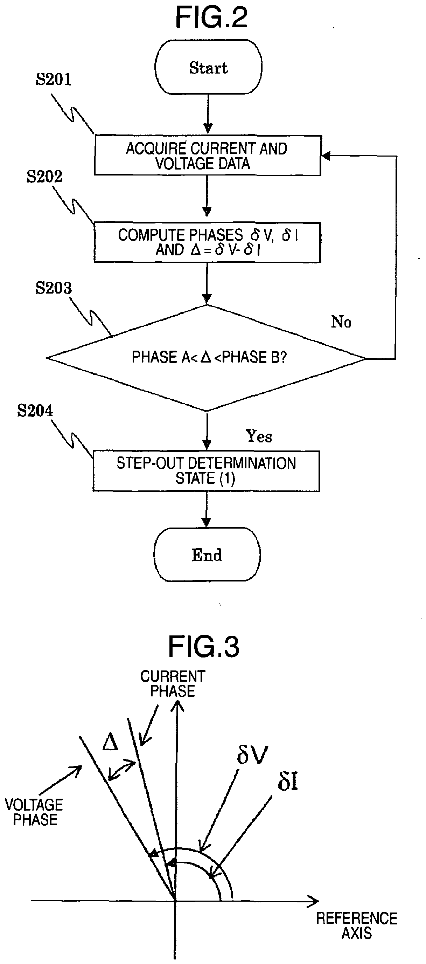

Fig. 2 is a flowchart until the step-out determination unit 109 in Embodiment 1 determines whether or not step-out has occurred. Determination of the flowchart is always performed after activation of the power conversion device. Fig. 3 is a relational diagram of phases in Embodiment 1.

The step-out determination unit 109 obtains, for example, Id and Iq from the current acquisition unit 107, and Vd* and Vq* from the output computation unit 108 (S201). The step-out determination unit 109 obtains the phases δI and 8V using Expression 5 and Expression 6, respectively, and computes phase difference Δ from δI and δV using Expression 8 (S202).
[Expression 8]

$$\Delta = \delta V - \delta I$$

(Expression 8)

The step-out determination unit 109 determines whether the phase difference Δ is within a prescribed range, for example, ±30° (between a phase A=-30° and a phase B=30°) (S203), and determines that a step-out determination state (1) is occurring if it is within the range (S204), but continues monitoring if it is out of the range.

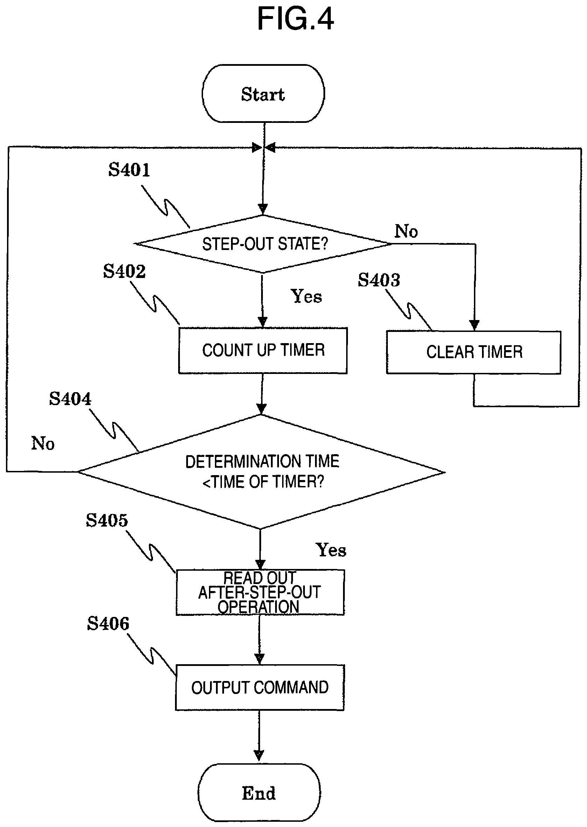

Fig. 4 shows operation of the step-out determination unit 109 when step-out determination is performed.

The step-out determination unit 109 determines whether a step-out determination state is occurring (S401), and counts up a timer if the step-out determination state is occurring (S402), but clears the timer and returns to step-out determination state determination if the step-out determination state is not occurring (S403). The step-out determination unit 109 determines whether the time of the timer has reached a prescribed determination time or more (S404), determines that step-out has occurred, for example, if the time has reached five seconds or more, and reads out a preset setting value of after-step-out operation from the storage unit 111 (S405). The step-out determination unit 109 monitors the step-out determination state again if the time of the timer is within a prescribed second. This is to avert malfunction of the power conversion device if a step-out determination state is erroneously detected, and the preset setting value of after-step-out operation may be read out from the storage unit 111 right after it is determined that the step-out determination state is occurring. The step-out determination unit 109 commands the output computation unit 108 to perform the after-step-out operation (S406).

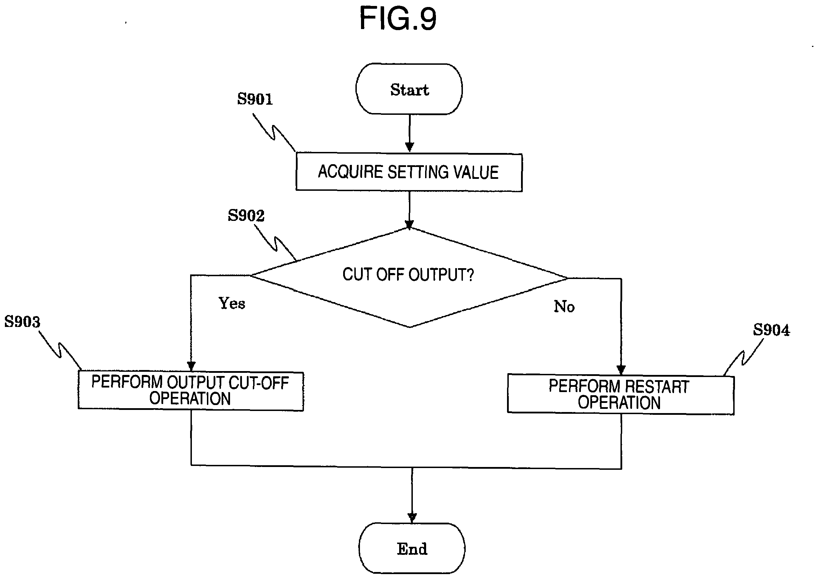

Fig. 9 is a flowchart indicating operation of the output computation unit 108 after receiving the command from the step-out determination unit 109.

The output computation unit 108 obtains after-step-out operation setting from the storage unit 111 (S901), determines which the setting value commands, output cut-off or restart (S902), and outputs an output cut-off command to the power conversion unit 104 if output cut-off is performed (S903), but outputs a restart command to the power conversion unit 104 if restart is performed.

The present invention is especially effective in that it can perform stable step-out detection even in a low-speed region (for example, speed at 10% or lower of a base frequency) from a startup to sensor less vector control. Step-out detection in a speed region where sensor vector control is performed may be performed in accordance with another system by switching control. In addition, in a speed region where sensor less vector control is performed, the step-out detection system of the present invention may be continuously applied.

EMBODIMENT 2

In this embodiment, parts common to Embodiment 1 will be explained using the same reference characters and different parts will be explained in detail. The configuration of this embodiment is the same as Fig. 1 explained in Embodiment 1, and includes a three-phase AC power supply 101, a DC conversion unit 102, a smoothing capacitor 103, a power conversion unit 104, a synchronous motor 105, a current detector 106, a current acquisition unit 107, an output computation unit 108, a step-out determination unit 109, a display operation unit 110, and a storage unit 111.

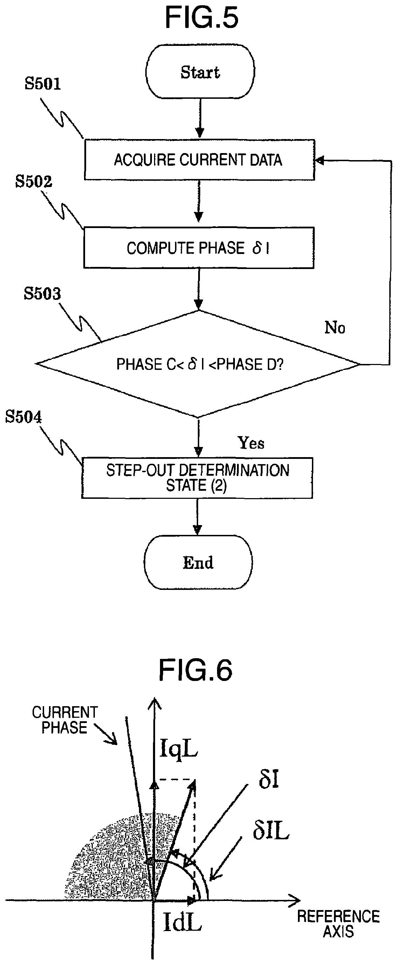

Next, the step-out detection principle of the embodiment will be explained. Fig. 6 is a diagram showing the phase relation of a step-out determination state in the embodiment. For example, if the defined torque characteristic of the synchronous motor is 200% of the rated current of the synchronous motor, regarding, for example, current data Id and Iq in a two-axis coordinate system in which a magnet axis is made a "d" axis and an axis orthogonal to it is made a "q" axis, a state in which the current Iq contributing to torque is 200% or more in power running torque, or is -200% or less in regenerative torque is out of a control range, and therefore is determined to be abnormal. For example, if it is supposed that the maximum current value IqL of Iq* in Expression 2 is 200%, and the maximum command value IdL of Id* is 10%, the maximum phase δIL becomes about 87°, if the current phase δI is, for example, in a range from 87° to 180°, it is determined that a step-out determination state is occurring.

The above determination example is one example, and the range may be set to any range as long as it is a phase range that allows step-out to be determined.

The embodiment detects step-out using that state. Fig. 5 is a flowchart until the step-out determination unit 109 in Embodiment 2 determines whether or not step-out has occurred.

The step-out determination unit 109, for example, obtains Id and Iq from the current acquisition unit 107 (S501). The step-out determination unit 109 obtains the phase δI using Expression 5 (S502). The step-out determination unit 109, for example, sets a phase C in Fig. 5 to 87° and a phase D to 180°, determines whether the phase $\delta I$ is in a range between the phase C and the phase D (S503), and determines that a step-out determination state (2) is occurring if the phase $\delta I$ is in the range (S504), but continues monitoring the current phase if the phase $\delta I$ is not in the range.

If the step-out determination unit 109 has determined that step-out is occurring, it determines the step-out determination state according to the flowchart in Fig. 4 as in Embodiment 1. Furthermore, the output computation unit 108 determines operation after step-out determination according to the flowchart in Fig. 9 as in Embodiment 1.

EMBODIMENT 3

In this embodiment, parts common to Embodiment 1 will be explained using the same reference characters and different parts will be explained in detail. The configuration of this embodiment is the same as Fig. 1 explained in Embodiment 1, and includes a three-phase AC power supply 101, a DC conversion unit 102, a smoothing capacitor 103, a power conversion unit 104, a synchronous motor 105, a current detector 106, a current acquisition unit 107, an output computation unit 108, a step-out determination unit 109, a display operation unit 110, and a storage unit 111.

Next, the step-out detection principle of the embodiment will be explained. In the embodiment, a step-out determination state is detected using results of the step-out determination (1) in Embodiment 1 and the step-out determination (2) together. Because in the method in Embodiment 1, the state of Expression 7 can happen even in a normal state due to control calculation using Expression 2, and there is a possibility that there may be a need to set the step-out detection time in Fig. 4 longer. On the other hand, in the method in Embodiment 2, there is also a case where torque current is flowing in a normal state when torque current is in a high level, and there is a possibility that there may be a need to set the step-out detection time in Fig. 4 longer. The embodiment makes certain of the step-out determination state and can detect step-out in a short time by using Embodiment 1 and Embodiment 2 together.

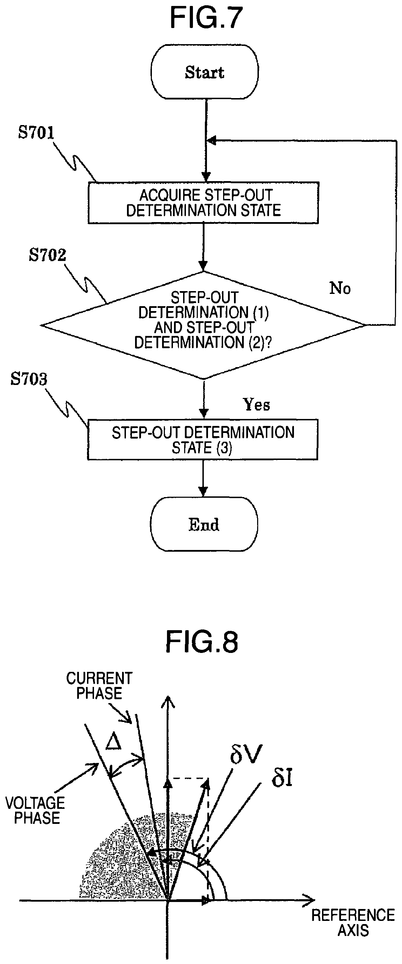

Fig. 7 is a flowchart of determination of the step-out determination state in Embodiment 3. The step-out determination unit 109 performs step-out determination using the flowcharts in Figs. 2 and 5, and obtains respective step-out determination states (S701). The step-out determination unit 109 determines whether both step-out determination state (1) and step-out determination state (2) are occurring (S702), and determines that a step-out determination state (3) is occurring if both step-out determination state (1) and step-out determination state (2) are occurring. The step-out determination unit 109 continues to monitor the step-out determination state again if any one of the step-out determination states is not occurring.

If the step-out determination unit 109 has determined that step-out is occurring, it determines the step-out determination state according to the flowchart in Fig. 4 as in Embodiment 1. Furthermore, the output computation unit 108 determines operation after step-out determination according to the flowchart in Fig. 9 as in Embodiment 1.

Regarding each constituent, function, processing unit, processing means, etc. in the above, part or all of those may be realized by means of hardware, for example, by designing them using an integrated circuit. In addition, the above-described constituents, functions, etc. may be realized by means of software by a processor interpreting and executing programs that enable the respective functions. Information such as a program, a table, or a file that enables each function can be stored in a recording device such as a memory, a hard disk, or an SSD (Solid State Drive) or a recording medium such as an IC card, an SD card or a DVD.

Regarding control lines and information lines, lines considered necessary for explanation are shown, and all control lines and information lines of a product are not necessarily shown. Actually, it may be safe to consider almost all constituents are connected with each other.

REFERENCE SIGNS LIST

| | |
|---|---|
| 101 | Three-phase AC voltage |
| 102 | DC conversion unit |
| 103 | Smoothing capacitor |
| 104 | Power conversion unit |
| 105 | Synchronous motor |
| 106 | Current detector |
| 107 | Current acquisition unit |
| 108 | Output computation unit |
| 109 | Step-out determination unit |
| 110 | Display operation unit |
| 111 | Storage unit |

**Claims**

1. A power conversion device comprising:

   a DC-voltage unit (103) configured to smooth DC voltage;
   a power conversion unit (104) configured to convert DC voltage into AC voltage;
   a current acquisition unit (107) configured to acquire current flowing through the power conversion unit (104);
   an output computation unit (108) configured to compute output voltage of the power conversion unit (104) from current acquired by the current acquisition unit (107); and
   a step-out determination unit (109) configured to determine whether or not step-out has occurred in a synchronous motor (105) connected to the power conversion unit (104), **characterized in that**:
   the step-out determination unit (109) is configured to determine that step-out has occurred in the synchronous motor (105) when a phase difference ($\Delta$) between a current phase ($\delta I$) of the current acquired by the current acquisition unit (107) and a voltage phase ($\delta V$) of the output voltage computed by the output computation unit (108) is within a prescribed range.

2. The power conversion device according to Claim 1, wherein the step-out determination unit (109) is configured to determine that step-out has occurred if a state of the phase difference ($\Delta$) being within a prescribed range has lasted for a prescribed time or more.

3. The power conversion device according to Claim 1, wherein the step-out determination unit (109) is configured to determine that step-out has occurred if the phase difference ($\Delta$) between the current phase ($\delta I$) and the voltage phase ($\delta V$) is within a prescribed range, and the current phase ($\delta I$) is within a prescribed range.

4. The power conversion device according to Claim 1, wherein the step-out determination unit (109) is configured to give a cut-off command to the output computation unit (108) and cut off output of the power conversion unit (104) if the step-out determination unit (109) has determined that step-out has occurred in the synchronous motor (105).

5. The power conversion device according to Claim 1, wherein the step-out determination unit (109) is configured to give a restart command to the output computation unit (108) and have the power conversion unit (104) automatically restart if the step-out determination unit (109) has determined that step-out has occurred in the synchronous motor (105).

6. The power conversion device according to Claim 1 comprising:

   a storage unit (111) configured to store prescribed data; and
   a display operation unit (110) configured to display data and accept operation by a user, wherein
   the step-out determination unit (109) is configured to selectively have the storage unit (111) store cutting off output of the power conversion unit (104) or restarting the power conversion unit (104) according to operation at the display operation unit (110) if the step-out determination unit (109) has determined that step-out has occurred in the synchronous motor (105), and is configured to read out data from the storage unit (111) to determine operation of the output computation unit (108) if the step-out determination unit (109) has determined that step-out has occurred in the synchronous motor (105).

**Patentansprüche**

1. Leistungswandlungsvorrichtung, die Folgendes umfasst:

   eine Gleichspannungseinheit (103), die ausgelegt ist, um Gleichspannung zu glätten;
   eine Leistungswandlungseinheit (104), die ausgelegt ist, um Gleichspannung in Wechselspannung umzuwandeln;
   eine Stromerfassungseinheit (107), die ausgelegt ist, um Strom zu erfassen, der durch die Leistungswandlungsvorrichtung (104) fließt;
   eine Ausgangsberechnungseinheit (108), die ausgelegt ist, um eine Ausgangsspannung der Leistungswandlungseinheit (104) von Strom, der durch die Stromerfassungseinheit (107) erfasst wurde, zu berechnen; und
   eine Außer-Tritt-Bestimmungseinheit (109), die ausgelegt ist, um zu bestimmen, ob in dem Synchronmotor (105), der mit der Leistungswandlungsvorrichtung (104) verbunden ist, ein Außer-Tritt-Fallen aufgetreten ist,

EP 3 089 354 B1

**dadurch gekennzeichnet, dass**:

die Außer-Trittbestimmungseinheit (109) ausgelegt ist, um zu bestimmen, dass in dem Synchronmotor (105) ein Außer-Tritt-Fallen aufgetreten ist, wenn eine Phasenverschiebung (Δ) zwischen einer Stromphase (δI) des Stroms, der durch die Stromerfassungseinheit (107) erfasst wurde, und einer Spannungsphase (δV) der Ausgangsspannung, die durch die Ausgangsberechnungseinheit (108) berechnet wurde, innerhalb eines vordefinierten Bereichs liegt.

2.  Leistungswandlungsvorrichtung nach Anspruch 1, wobei die Außer-Trittbestimmungseinheit (109) ausgelegt ist, um zu bestimmen, dass ein Außer-Tritt-Fallen aufgetreten ist, wenn ein Zustand der Phasenverschiebung (Δ), die innerhalb eines vordefinierten Bereichs liegt, für einen vordefinierten Zeitraum oder länger anhält.

3.  Leistungswandlungsvorrichtung nach Anspruch 1, wobei die Außer-Trittbestimmungseinheit (109) ausgelegt ist, um zu bestimmen, dass ein Außer-Tritt-Fallen aufgetreten ist, wenn die Phasenverschiebung (Δ) zwischen der Stromphase (δI) und der Spannungsphase (δV) innerhalb eines vordefinierten Bereichs liegt, und die Stromphase (δI) innerhalb eines vordefinierten Bereichs liegt.

4.  Leistungswandlungsvorrichtung nach Anspruch 1, wobei die Außer-Trittbestimmungseinheit (109) ausgelegt ist, um der Ausgangsberechnungseinheit (108) einen Abschaltbefehl zu erteilen und einen Ausgang der Leistungswandlungseinheit (104) abzuschalten, wenn die Außer-Trittbestimmungseinheit (109) bestimmt hat, dass ein Außer-Tritt-Fallen in dem Synchronmotor (105) aufgetreten ist.

5.  Leistungswandlungsvorrichtung nach Anspruch 1, wobei die Außer-Trittbestimmungseinheit (109) ausgelegt ist, um der Ausgangsberechnungseinheit (108) einen Neustartbefehl zu erteilen und die Leistungswandlungseinheit (104) automatisch neustarten zu lassen, wenn die Außer-Trittsbestimmungseinheit (109) bestimmt hat, dass ein Außer-Tritt-Fallen in dem Synchronmotor (105) aufgetreten ist.

6.  Leistungswandlungsvorrichtung nach Anspruch 1, die Folgendes umfasst:

    eine Speichereinheit (111), die ausgelegt ist, um vordefinierte Daten zu speichern; und
    eine Anzeigebetriebseinheit (110), die ausgelegt ist, um Daten anzuzeigen und den Betrieb durch einen Benutzer anzunehmen, wobei
    die Außer-Trittbestimmungseinheit (109) ausgelegt ist, um die Speichereinheit (111) selektiv eine Abschaltung eines Ausgangs der Leistungswandlungseinheit (104) speichern zu lassen oder die Leistungswandlungseinheit (104) gemäß Betrieb an der Anzeigebetriebseinheit (110) neu zu starten, wenn die Außer-Trittbestimmungseinheit (109) bestimmt hat, dass ein Außer-Tritt-Fallen in dem Synchronmotor (105) aufgetreten ist, und ausgelegt ist, um Daten von der Speichereinheit (111) auszulesen, um einen Betrieb der Ausgangsberechnungseinheit (108) zu bestimmen, wenn die Außer-Trittsbestimmungseinheit (109) bestimmt hat, dass ein Außer-Tritt-Fallen in dem Synchronmotor (105) aufgetreten ist.

**Revendications**

1.  Dispositif de conversion de puissance, comprenant :

    une unité de tension de courant continu, CC, (103) configurée pour lisser une tension CC ;
    une unité de conversion de puissance (104) configurée pour convertir une tension CC en une tension de courant alternatif, CA ;
    une unité d'acquisition de courant (107) configurée pour acquérir un courant circulant à travers l'unité de conversion de puissance (104) ;
    une unité de calcul de sortie (108) configurée pour calculer une tension de sortie de l'unité de conversion de puissance (104) à partir d'un courant acquis par l'unité d'acquisition de courant (107) ; et
    une unité de détermination de décrochage (109) configurée pour déterminer si une sortie s'est produite ou non dans un moteur synchrone (105) connecté à l'unité de conversion de puissance (104), **caractérisé en ce que** :
    l'unité de détermination de décrochage (109) est configurée pour déterminer qu'un décrochage s'est produit dans le moteur synchrone (105) lorsqu'une différence de phase (Δ) entre une phase de courant (δI) du courant acquis par l'unité d'acquisition de courant (107) et une phase de tension (δV) de la tension de sortie calculée par l'unité de calcul de sortie (108) est dans une plage prescrite.

9

**2.** Dispositif de conversion de puissance selon la revendication 1, dans lequel l'unité de détermination de décrochage (109) est configurée pour déterminer qu'un décrochage s'est produit si un état de la différence de phase (Δ) se trouvant dans une plage prescrite a duré pendant un temps prescrit ou plus.

**3.** Dispositif de conversion de puissance selon la revendication 1, dans lequel l'unité de détermination de décrochage (109) est configurée pour déterminer que le décrochage s'est produit si la différence de phase (Δ) entre la phase de courant (δI) et la phase de tension (δV) est dans une plage prescrite, et la phase de courant (δI) est dans une plage prescrite.

**4.** Dispositif de conversion de puissance selon la revendication 1, dans lequel l'unité de détermination de décrochage (109) est configurée pour donner une instruction de coupure à l'unité de calcul de sortie (108) et couper la sortie de l'unité de conversion de puissance (104) si l'unité de détermination de décrochage (109) a déterminé que le décrochage s'est produit dans le moteur synchrone (105).

**5.** Dispositif de conversion de puissance selon la revendication 1, dans lequel l'unité de détermination de décrochage (109) est configurée pour donner une instruction de redémarrage à l'unité de calcul de sortie (108) et faire redémarrer automatiquement l'unité de conversion de puissance (104) si l'unité de détermination de décrochage (109) a déterminé que le décrochage s'est produit dans le moteur synchrone (105).

**6.** Dispositif de conversion de puissance selon la revendication 1 comprenant :

une unité de stockage (111) configurée pour stocker des données prescrites ; et
une unité d'opération d'affichage (110) configurée pour afficher des données et accepter une opération par un utilisateur, dans lequel
l'unité de détermination de décrochage (109) est configurée pour que l'unité de stockage (111) stocke sélectivement une sortie de coupure de l'unité de conversion de puissance (104) ou redémarre l'unité de conversion de puissance (104) selon l'opération au niveau de l'unité d'opération d'affichage (110) si l'unité de détermination de décrochage (109) a déterminé que le décrochage s'est produit dans le moteur synchrone (105), et est configurée pour lire des données à partir de l'unité de stockage (111) pour déterminer une opération de l'unité de calcul de sortie (108) si l'unité de détermination de décrochage (109) a déterminé que le décrochage s'est produit dans le moteur synchrone (105) .

FIG.1

# FIG.2

```
                    ┌─────────────┐
                    │    Start    │
                    └─────────────┘
                           │
                           ▼
S201    ┌──────────────────────────────┐
        │   ACQUIRE CURRENT AND        │◄──────────┐
        │      VOLTAGE DATA            │           │
        └──────────────────────────────┘           │
                           │                        │
                           ▼                        │
S202    ┌──────────────────────────────┐           │
        │  COMPUTE PHASES δV, δI       │           │
        │   AND Δ = δV- δI             │           │
        └──────────────────────────────┘           │
                           │                        │
                           ▼                        │
S203                  ╱──────────╲          No      │
                 ╱──────────────────╲───────────────┘
                 ╲  PHASE A< Δ <PHASE B?  ╱
                     ╲──────────────────╱
                           │
                           │ Yes
                           ▼
S204    ┌──────────────────────────────┐
        │  STEP-OUT DETERMINATION      │
        │       STATE (1)              │
        └──────────────────────────────┘
                           │
                           ▼
                    ┌─────────────┐
                    │     End     │
                    └─────────────┘
```

# FIG.3

CURRENT
PHASE

Δ

δV

δI

VOLTAGE
PHASE

REFERENCE
AXIS

# FIG.4

```
                    ┌─────────┐
                    │  Start  │
                    └─────────┘
                         │
                         ▼
   ┌──────────────────────────────────────────────┐
   │         ◇─────────────────────◇              │
 S401│       ◇   STEP-OUT STATE?    ◇──── No       │
   │         ◇─────────────────────◇              │
   │                    │                          │
   │                   Yes                         │
   │                    ▼                          │
 S402│        ┌──────────────────┐    S403  ┌──────────────┐
   │        │  COUNT UP TIMER  │          │ CLEAR TIMER  │
   │        └──────────────────┘          └──────────────┘
```

(Step labels visible: S401 STEP-OUT STATE? ; S402 COUNT UP TIMER ; S403 CLEAR TIMER ; S404 DETERMINATION TIME <TIME OF TIMER? ; S405 READ OUT AFTER-STEP-OUT OPERATION ; S406 OUTPUT COMMAND)

**S404** — DETERMINATION TIME <TIME OF TIMER?  — No / Yes

**S405** — READ OUT AFTER-STEP-OUT OPERATION

**S406** — OUTPUT COMMAND

End

## FIG.5

```
                    ┌─────────────┐
                    │    Start    │
                    └─────────────┘
                           │
                           ▼
S501      ┌──────────────────────────────┐
          │    ACQUIRE CURRENT DATA       │◄─────┐
          └──────────────────────────────┘      │
                           │                     │
                           ▼                     │
S502      ┌──────────────────────────────┐      │
          │    COMPUTE PHASE  δI          │      │
          └──────────────────────────────┘      │
                           │                     │
                           ▼                     │
S503                ◇                       No   │
          PHASE C< δI <PHASE D? ─────────────────┘
                    ◇
                           │ Yes
                           ▼
S504      ┌──────────────────────────────┐
          │   STEP-OUT DETERMINATION      │
          │         STATE (2)             │
          └──────────────────────────────┘
                           │
                           ▼
                    ┌─────────────┐
                    │     End     │
                    └─────────────┘
```

## FIG.6

# FIG.7

Start

S701

ACQUIRE STEP-OUT
DETERMINATION STATE

S702

STEP-OUT
DETERMINATION (1)
AND STEP-OUT
DETERMINATION (2)?

No

Yes

S703

STEP-OUT DETERMINATION
STATE (3)

End

# FIG.8

CURRENT
PHASE

$\Delta$

$\delta V$

$\delta I$

VOLTAGE
PHASE

REFERENCE
AXIS

# FIG.9

S901 → ACQUIRE SETTING VALUE

S902 → CUT OFF OUTPUT?

Yes — S903 → PERFORM OUTPUT CUT-OFF OPERATION

No — S904 → PERFORM RESTART OPERATION

Start → End

EP 3 089 354 B1

**REFERENCES CITED IN THE DESCRIPTION**

**Patent documents cited in the description**

- JP 4167863 B
- JP 2009065764 A
- JP 2001025282 A
- JP 2008092787 A
- JP 2009174416 A